# EUROPEAN PATENT APPLICATION

(11) **EP 2 151 711 A1**
(43) Date of publication of application: **10.02.2010**
(21) Application number: 09008473.2
(22) Date of filing: 29.06.2009
(51) Int. Cl.: G02F 1/1339

(54) **Liquid crystal sealing apparatus**

(30) Priority: 07.08.2008 JP 2008204334
(71) Applicant: Fujinon Corporation, Saitama-shi, Saitama (JP)
(72) Inventor: Takahashi, Hidenori, Saitama-shi, Saitama (JP); Kanda, Hideo, Saitama-shi, Saitama (JP)
(74) Representative: Klunker . Schmitt-Nilson . Hirsch

(57) **Abstract**

A liquid crystal sealing apparatus that radiates light to a sealing layer for sealing liquid crystal between a pair of substrates to cure the sealing layer includes: a laser beam source that emits laser beams as the light; and an optical system V that shapes the laser beams such that regions irradiated with the laser beams emitted from the laser beam source are substantially identical to the shape of the sealing layer. According to the liquid crystal sealing apparatus, since laser beams are used as light, it is possible to substantially restrict the irradiation regions to the sealing layer. Therefore, a mask for covering a liquid crystal region is not needed, and it is possible to radiate light with sufficiently high intensity to the sealing layer. As a result, it is possible to reliably seal the liquid crystal.

## Description

### BACKGROUND OF THE INVENTION

### 1. Field of the Invention

The present invention relates to a liquid crystal sealing apparatus that is used to manufacture a liquid crystal panel of a liquid crystal display.

### 2. Description of the Related Art

A liquid crystal sealing apparatus has been proposed which radiates light to the entire liquid crystal panel to cure a sealing layer for sealing liquid crystal in the liquid crystal panel (for example, see JP-A-2004-4563). In the liquid crystal sealing apparatus, it is necessary to put a mask on a liquid crystal region in the surface of the liquid crystal panel in order to prevent deterioration of the performance of the liquid crystal due to light.

However, in recent years, with an increase in the size of the liquid crystal display, an increase in the area of an image display portion (that is, a liquid crystal region) in the liquid crystal panel has been required. When the area of the liquid crystal region increases, the area of a frame other than the liquid crystal region is reduced, and a region for forming a sealing layer is restricted. When the width of the sealing layer is reduced, most of the sealing layer is disposed in the vicinity of the boundary with the liquid crystal. In this case, when the liquid crystal sealing apparatus according to the related art is used to emit light, the light emitted to the sealing layer is shielded by the mask covering the liquid crystal region. As a result, the sealing layer is not sufficiently cured, and it is difficult to reliably seal the liquid crystal.

### SUMMARY OF THE INVENTION

The invention has been made in order to solve the above-mentioned problems, and an object of the invention is to provide a liquid crystal sealing apparatus capable of reliably sealing liquid crystal.

According to an aspect of the invention, there is provided a liquid crystal sealing apparatus that radiates light to a sealing layer for sealing liquid crystal between a pair of substrates to cure the sealing layer. The liquid crystal sealing apparatus includes: a laser beam source that emits a laser beam as the light; and an optical system that shapes the laser beam such that a region irradiated with the laser beam emitted from the laser beam source is substantially identical to the shape of the sealing layer.

According to the liquid crystal sealing apparatus, a laser beam is used as light for curing the sealing layer. Therefore, it is possible to shape the laser beam to restrict an irradiation region to the sealing layer. As a result, since there is little light emitted to the liquid crystal, it is not necessary to form a mask for protecting the liquid crystal region, and it is possible to radiate light with sufficiently high intensity to the sealing layer without being shielded by the mask. In this way, it is possible to reliably cure the sealing layer. As a result, it is possible to reliably seal the liquid crystal.

The liquid crystal sealing apparatus according to the above-mentioned aspect may further include a mirror that reflects the laser beam shaped by the optical system. The mirror makes it possible to reduce the linear distances between the laser beam source and the optical system, and an irradiation target of the laser beam while sufficiently ensuring the length of the path of the laser beam emitted from the laser beam source to the irradiation target. In this way, it is possible to sufficiently diffuse the laser beam to form an irradiation region with a necessary size, and reduce the size of a liquid crystal sealing apparatus.

In the liquid crystal sealing apparatus according to the above-mentioned aspect, the laser beam source and the optical system may be movable forward or backward in the traveling direction of the laser beam passing through the optical system. According to the above-mentioned structure, since the laser beam source and the optical system are movable forward or backward, it is possible to change the size of an irradiation region formed by the laser beam. Therefore, it is easy to apply the liquid crystal sealing apparatus to manufacture liquid crystal panels with various sizes. As a result, it is possible to improve the compatibility of the liquid crystal sealing apparatus.

According to the invention, it is possible to reliably seal liquid crystal.

### BRIEF DESCRIPTION OF THE DRAWINGS

Fig. 1 is a plan view illustrating a liquid crystal sealing apparatus according to an embodiment of the invention;
Fig. 2 is a side view illustrating the liquid crystal sealing apparatus shown in Fig. 1;
Fig. 3 is a partial cross-sectional view taken along the line III-III of Fig. 1;
Fig. 4 is a side view illustrating a laser unit of the liquid crystal sealing apparatus shown in Fig. 1;
Fig. 5 is a plan view illustrating the laser unit of the liquid crystal sealing apparatus shown in Fig. 1; and
Fig. 6 is a plan view illustrating a liquid crystal panel sealed by the liquid crystal sealing apparatus shown in Fig. 1.

### DESCRIPTION OF THE PREFERRED EMBODIMENTS

Hereinafter, a liquid crystal sealing apparatus according to an exemplary embodiment of the invention will be described in detail with reference to the accompanying drawings.

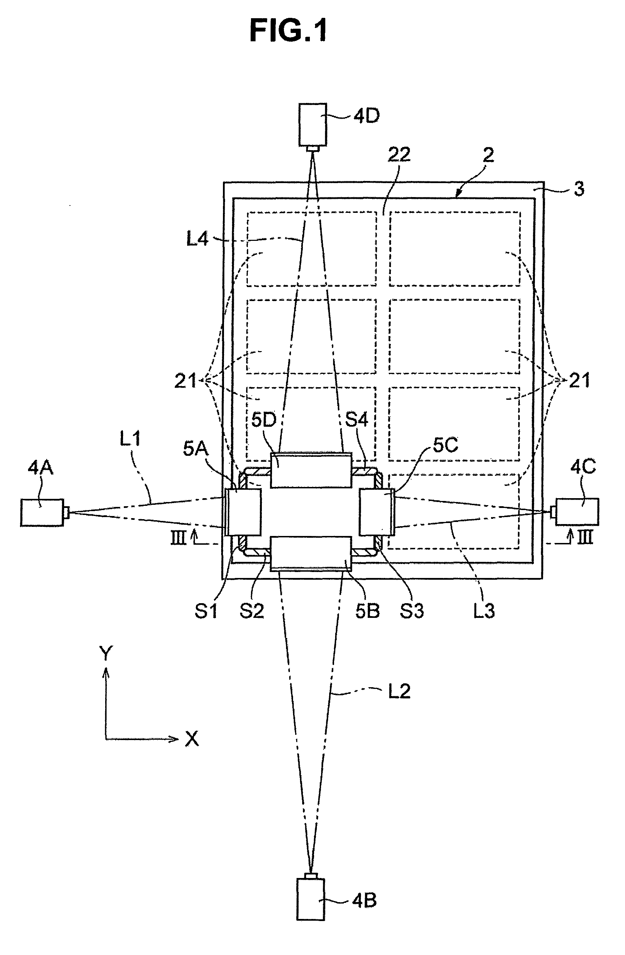

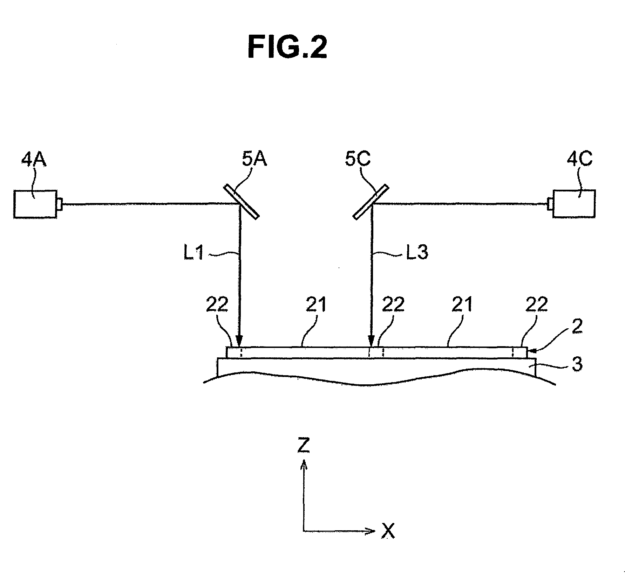

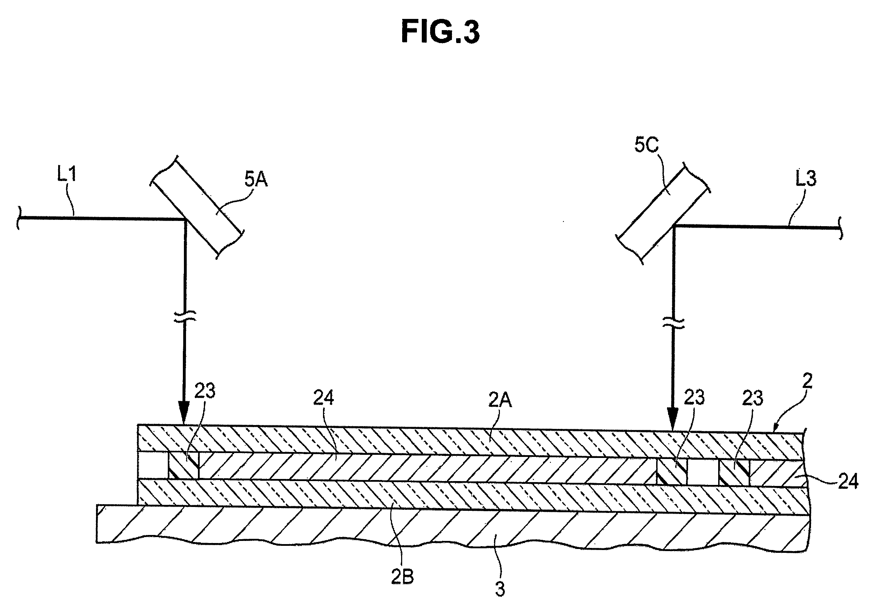

Fig. 1 is a plan view illustrating a liquid crystal sealing apparatus according to an embodiment of the invention, and Fig. 2 is a side view illustrating the liquid crystal sealing apparatus shown in Fig. 1. Fig. 3 is a partial cross-sectional view taken along the line III-III of Fig. 1. As shown in Figs. 1 to 3, a liquid crystal sealing apparatus 1 is used to manufacture a liquid crystal panel of a liquid crystal display.

The liquid crystal sealing apparatus 1 includes an XY stage 3 on which a mother panel 2 to be divided into a plurality of liquid crystal panels is placed, four laser units 4A, 4B, 4C, and 4D that are arranged around the XY stage 3, and four mirrors 5A, 5B, 5C, and 5D that are arranged above the XY stage 3 and reflect laser beams emitted from the laser units 4A to 4D to the mother panel 2.

The mother panel 2 is a rectangular member having two glass substrates 2A and 2B that are arranged opposite to each other. The mother panel 2 is obtained by forming eight rectangular-frame-shaped sealing layers 23 made of a light-curable resin on the substrate 2B, dropping liquid crystal 24 into regions surrounded by the sealing layers 23, and placing the substrate 2A on the substrate 2B so as to overlap each other.

Eight liquid crystal regions 21 (image display portions of the liquid crystal panel) partitioned by the rectangular-frame-shaped sealing layers 23 are formed in the mother panel 2. Each of the liquid crystal regions 21 has a rectangular shape having long sides extending in the X-axis direction and short sides extending in the Y-axis direction. Two liquid crystal regions 21 are arranged in the X-axis direction and four liquid crystal regions 21 are arranged in the Y-axis direction in the mother panel 2. A frame portion 22 having a very small width is provided around each of the liquid crystal regions 21, and the sealing layers 23 are disposed in the frame portion 22. The mother panel 2 is supported by the XY stage 3 that is movable in the XY plane, and the XY stage 3 is driven by a driving unit (not shown) to move the mother panel 2 in the XY plane.

The laser units 4A to 4D are provided above the mother panel 2 in the oblique direction so as to surround one liquid crystal region 21, which is a liquid crystal seal target. The laser units 4A and 4C are arranged opposite to each other with the liquid crystal region 21, which is a liquid crystal seal target, interposed therebetween in the X-axis direction, and the laser units 4B and 4D are arranged opposite to each other with the liquid crystal region 21 interposed therebetween in the Y-axis direction.

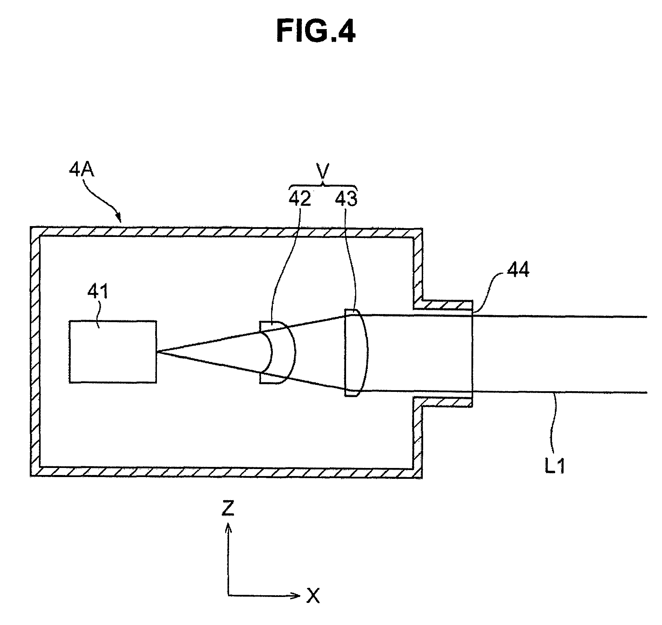

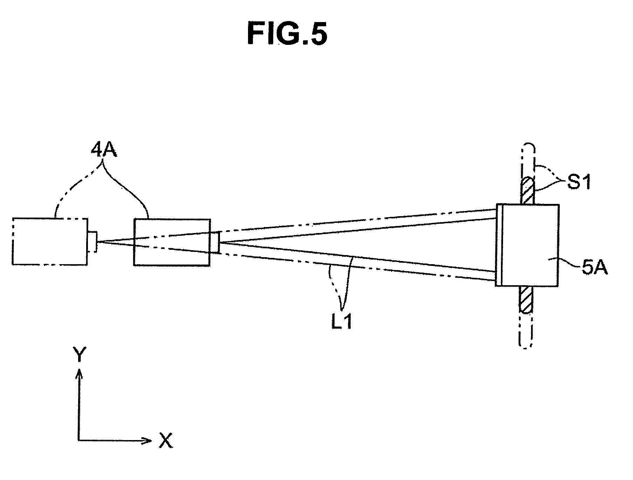

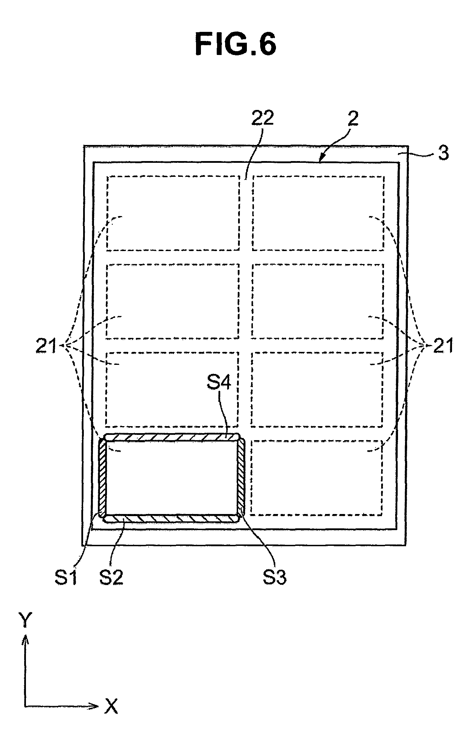

Fig. 4 is a diagram illustrating the structure of the laser unit of the liquid crystal sealing apparatus shown in Fig. 1, and Fig. 5 is a plan view illustrating the laser unit of the liquid crystal sealing apparatus shown in Fig. 1. Fig. 6 is a plan view illustrating a liquid crystal panel sealed by the liquid crystal sealing apparatus shown in Fig. 1. As shown in Fig. 4, the laser unit 4A includes a laser beam source 41 that emits a laser beam and an optical system V that shapes a laser beam L1 emitted from the laser beam source 41 such that a region irradiated with the laser beam L1 corresponds to the shape of the sealing layer 23. The laser beam L1 shaped by the optical system V is emitted to the outside through an emission hole 44.

The optical system V includes an apodizer lens 42 that uniformizes the distribution of the quantity of laser beam L1 emitted from the laser beam source 41 and a cylindrical lens 43 that shapes the laser beam L1 such that the width of the laser beam L1 in the Z-axis direction is uniform. The optical system V shapes the laser beam L1 using the apodizer lens 42 and the cylindrical lens 43 to form an oval irradiation region S1 having a uniform light quantity distribution and a constant width on the mother panel 2 (see Fig. 6). The width of the laser beam L1 shaped by the cylindrical lens 43 in the Z-axis direction is set to correspond to the width of the sealing layer 23.

The laser unit 4A is configured so as to be moved forward or backward in a direction in which the laser unit 4A emits a laser beam (that is, in the traveling direction of the laser beam L1 passing through the optical system V in the laser unit 4A) (see Fig. 5). The laser units 4B to 4D have the same structure as the laser unit 4A.

As shown in Figs. 1, 2, and 6, the mirrors 5A to 5D are arranged so as to correspond to four sides of the liquid crystal region 21, which is a liquid crystal seal target. Specifically, the mirrors 5A and 5C are arranged above the short sides of the liquid crystal region 21 so as to be inclined at a predetermined angle with respect to the Z axis. The mirrors 5A and 5C reflect laser beams L1 and L3 respectively emitted from the laser units 4A and 4C to the mother panel 2, and oval irradiation regions S1 and S3 are formed by the reflected laser beams so as to surround the short sides of the liquid crystal region 21 (the short sides of the rectangular-frame-shaped sealing layer 23), which is a liquid crystal seal target. The irradiation regions S1 and S3 are formed so as not to overlap the liquid crystal region 21.

Similarly, the mirrors 5B to 5D are arranged above the long sides of the liquid crystal region 21 so as to be inclined at a predetermined angle with respect to the Z axis. The mirrors 5B and 5D reflect laser beams L2 and L4 respectively emitted from the laser units 4B and 4D to the mother panel 2, and oval irradiation regions S2 and S4 are formed by the reflected laser beams so as to surround the long sides of the liquid crystal region 21 (the long sides of the rectangular-frame-shaped sealing layer 23), which is a liquid crystal seal target. The irradiation regions S2 and S4 are formed so as not to overlap the liquid crystal region 21.

The liquid crystal sealing apparatus 1 having the above-mentioned structure operates as follows. First, the XY stage 3 moves the mother panel 2 such that four sides of the liquid crystal region 21 (that is, the frame-shaped sealing layer 23), which is a liquid crystal seal target, are disposed at positions corresponding to the mirrors 5A to 5D. In this state, when the laser units 4A to 4D simultaneously emit the laser beams L1 to L4, the laser beams L1 to L4 are reflected from the mirrors 5A to 5D, and form the oval irradiation regions S1 to S4 so as to be substantially identical to the shape of the sealing layer 23, respectively. As a result, the sealing layer 23 is cured by the laser beams L1 to L4, and the liquid crystal 24 is sealed in the liquid crystal region 21, which is a liquid crystal seal target. Then, the XY stage 3 is driven to move the mother panel 2 such that four sides of the next liquid crystal region 21 are disposed at positions corresponding to the mirrors 5A to 5D. The above-mentioned liquid crystal sealing process is repeatedly performed to seal the liquid crystal in all of the eight liquid crystal regions 21 of the mother panel 2. After all the liquid crystal regions 21 are sealed, the mother panel 2 is cut into the liquid crystal regions 21 along the frame portion 22. In this way, eight liquid crystal panels are formed from one mother panel 2. The number of liquid crystal panels formed from one mother panel may be 1 to 7, or 9 or more.

As described above, in the liquid crystal sealing apparatus 1 according to this embodiment, a laser beam is used as light for curing the sealing layer 23. Therefore, it is possible to shape the laser beams L1 to L4 to restrict the irradiation regions S1 to S4 to the sealing layer 23. As a result, since there is little light emitted to the liquid crystal 24, it is not necessary to form a mask for protecting the liquid crystal region 21, and it is possible to radiate light with sufficiently high intensity to the sealing layer 23 without being shielded by the mask. In this way, it is possible to reliably cure the sealing layer 23. As a result, it is possible to reliably seal the liquid crystal 24 and manufacture a liquid crystal panel with high reliability.

In addition, it is not necessary to form a mask, and an irradiation region is restricted to prevent the unnecessary radiation of light. Therefore, it is possible to reduce the manufacturing costs of a liquid crystal panel. In addition, it is possible to use a laser beam to obtain a sufficiently large amount of light with low power consumption, as compared to a light emitting device using a UV lamp according to the related art. As a result, it is possible to reduce manufacturing costs.

The optical system V makes the distribution of the quantity of light in the irradiation regions S1 to S4 uniform. Therefore, it is possible to prevent a variation in the curing of the sealing layer 23 due to a non-uniform distribution of the quantity of light. As a result, it is possible to more reliably seal the liquid crystal 24.

Further, since the liquid crystal sealing apparatus 1 includes the mirrors 5A to 5D, it is possible to reduce the linear distances between the laser units 4A to 4D and an irradiation target (liquid crystal region 21) while sufficiently ensuring the lengths of the paths of the laser beams L1 to L4 emitted from the laser units 4A to 4D. In this way, it is possible to sufficiently diffuse the laser beams L1 to L4 to form the irradiation regions S1 to S4 with appropriate sizes, and reduce the size of the liquid crystal sealing apparatus 1.

In the liquid crystal sealing apparatus 1, since the laser unit 4A is configured so as to be moved forward or backward in the direction in which a laser beam is emitted, it is possible to move the laser unit 4A forward or backward to adjust the size of the irradiation region S1 (see Fig. 5). Therefore, it is easy to apply the liquid crystal sealing apparatus 1 to manufacture liquid crystal panels with various sizes, and it is possible to improve the compatibility of the liquid crystal sealing apparatus 1.

The invention is not limited to the above-described embodiment.

For example, the number of laser units or mirrors is not limited to four, but it may be one. In addition, the number of laser units or mirrors may correspond to the product of the number of liquid crystal regions and the number of sides of the liquid crystal regions in the mother panel (32 in this embodiment). In this case, it is possible to seal the liquid crystal in all of the liquid crystal regions by one laser beam radiating operation. As a result, it is possible to rapidly perform a liquid crystal sealing operation.

The optical system V is not limited to the structure including the apodizer lens 42 and the cylindrical lens 43, but the structure of the optical system V may vary depending on, for example, the specifications of the laser beam source 41 or the size of the sealing layer 23.

## Claims

1. A liquid crystal sealing apparatus that radiates light to a sealing layer for sealing liquid crystal between a pair of substrates to cure the sealing layer, comprising:
a laser beam source that emits a laser beam as the light; and
an optical system that shapes the laser beam such that a region irradiated with the laser beam emitted from the laser beam source is substantially identical to the shape of the sealing layer.

2. The liquid crystal sealing apparatus according to claim 1, further comprising:
a mirror that reflects the laser beam shaped by the optical system.

3. The liquid crystal sealing apparatus according to claim 1 or 2,
wherein the laser beam source and the optical system are movable forward or backward in the traveling direction of the laser beam passing through the optical system.
